# EUROPEAN PATENT APPLICATION

(11) **EP 2 902 746 A1**
(43) Date of publication of application: **05.08.2015**
(21) Application number: 14464001.8
(22) Date of filing: 03.02.2014
(51) Int. Cl.: G01C 21/20, B60W 40/02, G01C 21/36, G08G 1/09

(54) **Driver assistance system and method for allocating and visualizing traffic codes prevailing for a vehicle**

(71) Applicant: Continental Automotive GmbH, 30165 Hannover (DE)
(72) Inventor: Cret, Mihai-Horatiu, 300585 Timisoara (RO)

(57) **Abstract**

According to an aspect of the present invention, a driver assistance system for visualizing traffic codes is provided, the driver assistance system comprising: a receiver unit (10) configured to receive navigation signals from a navigation satellite; a control unit (20) configured to determine a location of the vehicle based on the navigation signals and configured to allocate applying traffic codes based on the determined location; and a display unit (30) coupled to the control unit and configure to visualize the allocated traffic codes.

## Description

### Field of the invention

The invention relates to the field of automotive applications. In particular, the invention relates to a driver assistance system and a method for allocating and visualizing traffic codes prevailing for a vehicle, a vehicle comprising the driver assistance system, a program element and a computer-readable medium.

### Background

For vehicle systems, tachographs devices are meant to check and enforce the legal requirements regarding rest and driving time limits of the drivers.

Since there are different legislations from region to region, for instance Alaska has different legal requirements or traffic codes then those applicable in New York regarding the legal driving and rest time limits, traffic codes prevailing for a vehicle are of interest for the dirver. However, known and common tachographs systems record solely parameters like travelled distance or speed of the vehicle, lacking to provide any further information regarding the region the vehicle is currently located.

### Summary of the invention

It is an object of the invention to provide a driver assistance system for an increased safety to traffic.

This object is solved by the features of the independent claims. Developments of the invention are stated in the dependent claims and the following description.

According to a first aspect of the invention, a driver assistance system for visualizing traffic codes is provided, the driver assistance system comprising: a receiver unit configured to receive navigation signals from a navigation satellite; a control unit configured to determine a location of the vehicle based on the navigation signals and configured to allocate applying traffic codes based on the determined location; and a display unit coupled to the control unit and configure to visualize the allocated traffic codes.

According to a further aspect of the invention, a method for allocating and visualizing traffic codes prevailing for a vehicle is provided, the method comprising the steps of: receiving navigation signals from a navigation satellite; determining a location of the vehicle based on the navigation signals and allocating applying traffic codes based on the determined location; and visualizing the allocated traffic codes.

The basic idea of the present invention is given by the way the vehicle is detected as belonging to certain region with certain given legal requirements and by the way of identifying a crossing of the vehicle from one region to another region.

The present invention advantageously provides that the driver has no need to switch manually to a new set of legal requirements when the vehicle enters a new region. The driver is warned when the vehicle is about to switch to another region, distance to the closest region is less than a threshold making them aware of the new legal requirements that will be applicable to that region.

In case the crossing to the new region will cause any violation of the legal requirements for that region, the driver can take a required rest period before entering the new region. This way the drivers will be informed if it is legally safe to cross to the other region.

The present invention advantageously provides a driver assistance system that shall automatically detect the region where the vehicle is located. And according to the determined region, driver assistance system is enabled to apply the legal rules for that region. Drivers shall be warned whenever the vehicle is about to change the location from a region to an adjacent one to make him aware the applicable legal requirements will change.

In other words, the driver assistance system may allow a user to be aware of currently or locally applying legal requirements.

The legal requirements may be traffic codes, also motor vehicle code, which refer to the collection of local statutes, regulations, ordinances and rules that have been officially adopted in a region to govern the orderly operation and interaction of motor vehicles, bicycles, pedestrians and others upon the public ways and/or private ways.

According to an exemplary embodiment of the invention, the control unit comprises a tachograph device, which is configured to record speed and/or travelled distance of the vehicle. This advantageously allows detecting the region where the vehicle is presently located.

According to an exemplary embodiment of the invention, the tachograph device is configured to use the received navigation signals to record the speed and/or the travelled distance of the vehicle.

According to an exemplary embodiment of the invention, the control unit is configured to store regions comprising different traffic codes and configured to store the traffic codes that are applicable for each of the regions. This advantageously provides a summary database comprising several traffic codes applying for several regions.

According to an exemplary embodiment of the invention, the regions are in the forms of polygons. This advantageously provides a digital map model of a terrain and a road or transport infrastructure.

According to an exemplary embodiment of the invention, the control unit is configured to warn a driver of the vehicle if the vehicle is less than a predefined distance value close to an adjacent region. This advantageously allows improving the safety.

According to an exemplary embodiment of the invention, the method further comprises the step of recording speed and/or travelled distance of the vehicle. This advantageously allows detecting the region where the vehicle is presently located.

According to an exemplary embodiment of the invention, the method further comprises the step of storing regions comprising different traffic codes and storing the traffic codes that are applicable for each of the regions. This advantageously provides a summary database comprising several traffic codes applying for several regions.

According to an exemplary embodiment of the invention, the method further comprises the step of warning a driver of the vehicle if the vehicle is less than a predefined distance value close to an adjacent region.

According to another aspect of the invention, a program element is provided, which, when being executed on one or several processors of a navigation and communication system, instructs the system to perform the above and below described method steps.

According to another aspect of the invention, a computer-readable medium is provided, on which the above described program element is stored.

A computer-readable medium may be a floppy disk, a hard disk, a CD, a DVD, an USB (Universal Serial Bus) storage device, a RAM (Random Access Memory), a ROM (Read Only Memory) and an EPROM (Erasable Programmable Read Only Memory). A computer-readable medium may also be a data communication network, for example the Internet, which allows downloading a program code.

These and other aspects of the present invention will become apparent from and elucidated with reference to the embodiments described hereinafter.

Exemplary embodiments of the present invention will now be described in the following, with reference to the following drawings.

### Brief description of the drawings

- Fig. 1: shows a driver assistance system for allocating and visualizing traffic codes prevailing for a vehicle according to an exemplary embodiment of the present invention;
- Fig. 2: shows a schematic flow-chart of a method for allocating and visualizing traffic codes prevailing for a vehicle according to an exemplary embodiment of the present invention;
- Fig. 3: shows a schematic map comprising regions with various traffic codes for explaining the present invention; and
- Fig. 4: shows a schematic map comprising regions with various traffic codes for explaining the present invention.

### Detailed description of embodiments

The illustration in the accompanying drawings is schematically. In different drawings, similar or identical elements or steps are provided with the same reference numerals.

The following detailed description is merely exemplary in nature and is not intended to limit application and uses.

Furthermore, there is no intention to be bound by any theory presented in the preceding background or summary or the following detailed description.

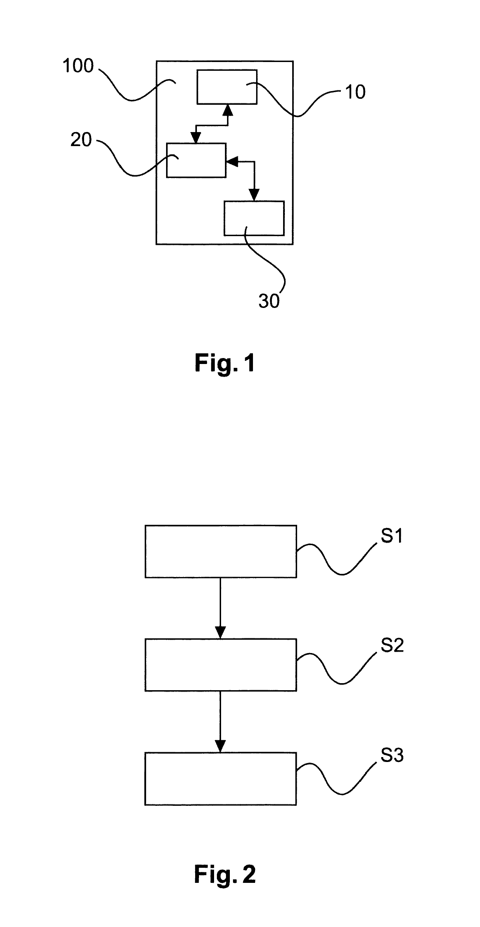

Fig. 1 shows a driver assistance system for allocating and visualizing traffic codes prevailing for a vehicle according to an exemplary embodiment of the present invention.

A driver assistance system 100 for allocating and visualizing traffic codes prevailing for a vehicle may comprise a receiver unit 10, a control unit 20 and a display unit 30.

The receiver unit 10 may be configured to receive navigation signals from a navigation satellite.

The control unit 20 may be coupled to the receiver unit 10 and may be configured to determine a location of the vehicle V based on the navigation signals and configured to allocate applying traffic codes based on the determined location.

The display unit 30 may be coupled to the control unit 20 and may be configured to visualize the allocated traffic codes.

Fig. 2 shows a schematic flow-chart of a method for allocating and visualizing traffic codes prevailing for a vehicle according to an exemplary embodiment of the present invention.

The method for allocating and visualizing traffic codes prevailing for a vehicle V may comprise the following steps:
As a first step of the method, receiving S1 navigation signals from a navigation satellite may be conducted.
As a second step of the method, determining S2 a location of the vehicle based on the navigation signals and allocating applying traffic codes based on the determined location may be performed.
As a third step of the method, visualizing S3 the allocated traffic codes is performed.

The present invention addresses the problem of identifying the region Ri where a vehicle V is located.

The present invention addresses the problem of identifying a crossing of the vehicle V from one region Ri to another region Rj, wherein i is not equal to j.

The receiver unit 10 may be a GNSS receiver, the display unit 30 may be part of a human machine interface for visual reception. The display unit 30 may be a liquid-crystal display (LCD) or any other flat panel display, an electronic visual display, or any kind of video display.

A satellite navigation system is a system of satellites that provide autonomous geo-spatial positioning with global coverage. Satellite navigation allows small electronic GNSS receivers to determine their location, for instance longitude, latitude, and altitude, to high precision, for instance within a few or less than 20 metres, using time signals transmitted along a line of sight by radio from satellites.

The signals also allow the electronic GNSS receivers to calculate the current local time to high precision, which allows time synchronisation. A satellite navigation system with global coverage may be termed a global navigation satellite system or GNSS.

The receiver 10 has capability to determine the precise geographic coordinates of the vehicle V where it is installed.

The HMI is capable of displaying warnings and other relevant information to the drivers.

The control unit 20 may be configured to store relevant regions borders in the forms of polygons.

Each point of the polygon may represent a geographical coordinate and the starting point is identical with the last point:
Polyᵢ{Pt₁, Pt₂, Pt₃ ........ Ptₙ, Pt₁) i > 0, n > 2

Each region might be represented by one or more (k) polygons:
Regionᵢ{Polyᵢ¹, Polyᵢ², Polyᵢ³, Polyᵢ^{k}) i > 0, k > 0

Each region might have a set of legal requirements assig ned to it:
(LegalRegionᵢ), (Regionᵢ, LegalRegionᵢ) i > 0

The position of the vehicle V may be defined by:
P*ₜ^{k} current*

A distance of the vehicle V to a Regionᵢ may be defined by:
D*ᵢ^{k}*

The following steps summarize the algorithm of automatically determining the legal requirements that are applicable for a certain region. However the algorithm is not restricted to these steps:
1.) Determine the current vehicle location using the GNSS receiver unit 10.
2.) Determine in which of the stored polygons the vehicle v is located: by checking which of the polygons is containing the current position of the vehicle v.
3.) Determine the region to which the polygon is belonging to and the set of applicable legal requirements:
4.) From the list of polygons determine the polygons that are adjacent to polygon and determine the other polygons that do not belong to the current region.
5.) Calculate the distances from the current position of the vehicle to each adjacent polygon.
6.) Determine the minimum distance of the calculated distances.
7.) If the calculated distance is lower than a predefined threshold value warn the driver that the vehicle is close to a region that has a new set of legal requirements.
8.) Determine a new value for the reiterate frequency according to the maximum vehicle speed.

For instance, 10 km is the distance to a further region and the maximum vehicle speed can be 60km/h it means the vehicle can theoretically enter a new region not earlier then within the next 10 min. Therefore, the reiterate frequency value will be set to a value smaller than 10 min.
9.) If the vehicle v is still moving conduct a further iteration of the whole procedure.

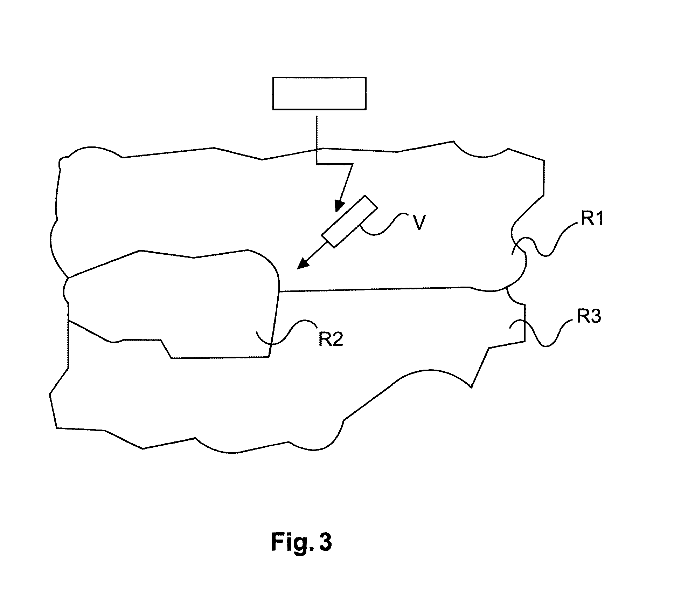

Fig. 3 shows a schematic map comprising regions with various traffic codes for explaining the present invention.

A vehicle V is located in region R1 comprising legal certain requirements. As illustrated in Figure 3, the vehicle V may head towards region R2. Further, the map shows a third region R3, which shares a boarder to each of the regions R1 and R2.

A vehicle V may comprise a driver assistance system 100 for allocating and visualizing traffic codes prevailing for a vehicle V, the driver assistance system comprising a receiver unit 10 configured to receive navigation signals from a navigation satellite. The navigation satellite is represented by the box above the vehicle V in Figure 3, the navigation signals are represented by the toothed or serrated arrow located between the vehicle V and the navigation satellite.

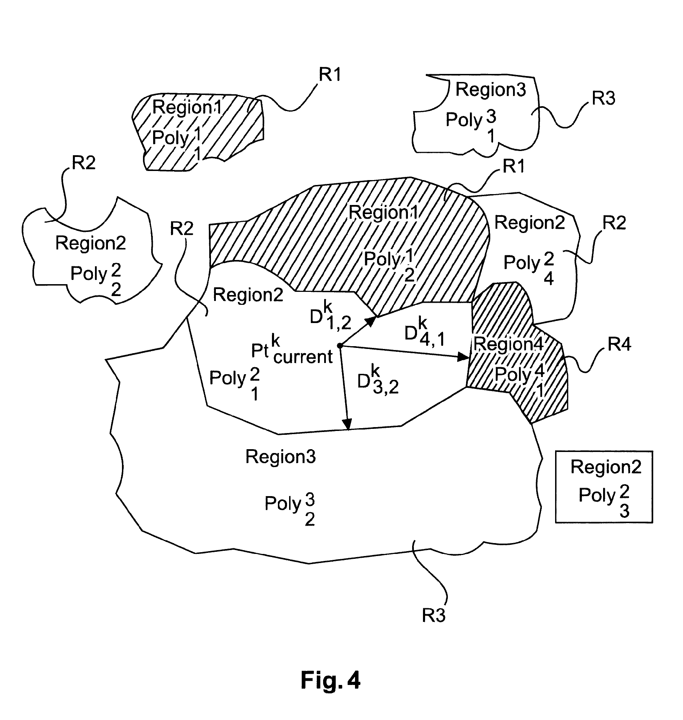

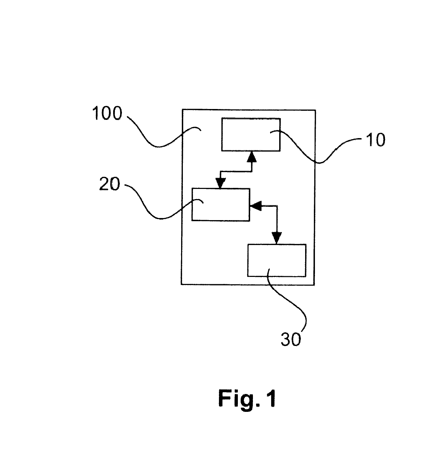

Fig. 4 shows a schematic map comprising regions with specific traffic codes for explaining the present invention.

Each region might be represented by one or more (k) polygons: The position of the vehicle V may be defined by: P*ₜ^{k}current.* A distance of the vehicle V to a Regionᵢ may be defined by: D*ᵢ^{k}*.

A vehicle V is located in region R2 comprising specified legal requirements. Three distances of the vehicle V to the three most adjacent regions R1, R3, R4 are depicted.

The most adjacent region is region R1. The shape and the form regions may be dynamically altered as indicated by the sectors separated from the rest of the map comprising a different shape than the regions inside the unfragmented conglomerate of regions.

It should be noted that the term "comprising" does not rule out a plurality. Let it further be noted that features described with reference to one of the above exemplary embodiments can also be used in combination with other features of other exemplary embodiments described above.

Moreover, while at least one exemplary embodiment has been presented in the foregoing summary and detailed description, it should be appreciated that a vast number of variations exist.

It should also be appreciated that the exemplary embodiment or exemplary embodiments are only examples, and are not intended to limit the scope, applicability, or configuration in any way.

Rather, the foregoing summary and detailed description will provide those skilled in the art with a convenient road map for implementing an exemplary embodiment, it being understood that various changes may be made in the function and arrangement of elements described in an exemplary embodiment without departing from the scope as set forth in the appended claims and their legal equivalents.

## Claims

1. Driver assistance system (100) for allocating and visualizing traffic codes prevailing for a vehicle (V), the driver assistance system comprising:
- a receiver unit (10) configured to receive navigation signals from a navigation satellite;
- a control unit (20) configured to determine a location of the vehicle (V) based on the navigation signals and configured to allocate applying traffic codes based on the determined location; and
- a display unit (30) coupled to the control unit and configured to visualize the allocated applying traffic codes.

2. Driver assistance system (100) of claim 1,
wherein the control unit (20) comprises a tachograph device, which is configured to record speed and/or travelled distance of the vehicle.

3. Driver assistance system (100) of claim 2,
wherein the tachograph device is configured to use the received navigation signals to record the speed and/or the travelled distance of the vehicle.

4. Driver assistance system (100) of one of the preceding claims,
wherein the control unit (20) is configured to store regions (R) comprising different traffic codes and configured to store the traffic codes that are applicable for each of the regions.

5. Driver assistance system (100) of claim 4,
wherein the regions are in the forms of polygons.

6. Driver assistance system (100) of claim 4 or 5,
wherein the control unit (20) is configured to warn a driver of the vehicle if the vehicle (V) is less than a predefined distance value close to an adjacent region.

7. A vehicle (V) comprising a driver assistance system (100) of one of claims 1 to 6.

8. Method for allocating and visualizing traffic codes prevailing for a vehicle (V), the method comprising the steps of:
- receiving (S1) navigation signals from a navigation satellite;
- determining (S2) a location of the vehicle based on the navigation signals and allocating applying traffic codes based on the determined location; and
- visualizing (S3) the allocated traffic codes.

9. Method of claim 8,
wherein the method further comprises the step of recording speed and/or travelled distance of the vehicle (V).

10. Method of one of the claims 8 to 9,
wherein the method further comprises the step of storing regions comprising different traffic codes and storing the traffic codes that are applicable for each of the regions.

11. Method of one of the claims 8 to 10,
wherein the method further comprises the step of warning a driver of the vehicle if the vehicle is less than a predefined distance value close to an adjacent region.

12. Program element, which, when being executed on one or several processors of a driver assistance system, instructs the system to perform the method steps of one of claims 8 to 11.

13. Computer-readable medium, on which a program element according to claim 12 is stored.
